# EUROPÄISCHE PATENTANMELDUNG

(11) **EP 2 237 188 A1**
(43) Veröffentlichungstag der Anmeldung: **06.10.2010**
(21) Anmeldenummer: 10003094.9
(22) Anmeldetag: 24.03.2010
(51) Int. Cl.: G06K 7/00, G08C 17/02, G09B 21/00, H04N 5/445, H04Q 9/00, G06K 17/00, H04L 29/00

(54) **Gerät mit einem elektronischen Bauteil und Verwendung des Gerätes**

(30) Priorität: 30.03.2009 DE 102009014937; 05.08.2009 DE 102009036140
(71) Anmelder: T.MED GESELLSCHAFT FÜR MED. SYSTEME MBH, 52499 Baesweiler (DE)
(72) Erfinder: Clasen, Uwe, 52428 Jülich (DE)
(74) Vertreter: Liermann - Castell

(57) **Zusammenfassung**

Personen mit Sehbehinderung fällt es häufig schwer, einfache Haushaltsgeräte zu bedienen. Dies liegt meist daran, dass sie den aktuellen Betriebszustand des Gerätes nicht kennen. Es wird daher vorgeschlagen, mittels RFID-Technologie auf einem RFID-Transponder aktuelle Betriebsdaten zu speichern, die mit einem Lesegerät gelesen und als Sprache kommuniziert werden können.

Insbesondere eine Standardisierung der Speicherung von Betriebsdaten auf dem RFID-Transponder erleichtert es, mittels eines einzigen Empfängers Betriebsdaten verschiedner Geräte zu erfassen und gegebenenfalls sogar zu verrechnen sowie dem Sehbehinderten akustisch mitzuteilen.

## Beschreibung

Die Erfindung betrifft ein Gerät mit einem elektronischen Bauteil und eine Verwendung des Gerätes.

Geräte mit elektronischen Bauteilen sind weit verbreitet und es gibt unterschiedlichste Anwendungen, bei denen die Elektronik bei der Bedienung der Geräte hilft.

Ein besonderes Problem mit derartigen Geräten haben jedoch Personen mit leichter, mittlerer oder auch schwerer Sehbehinderung, die in ihrem Alltagsleben beim Umgang mit Geräten sehr eingeschränkt sind. Das Bedienen einfachster Geräte im Haushalt und auch in Kraftfahrzeugen ist für Sehbehinderte oft nicht möglich. Hieraus erwachsen nicht nur Einschränkungen, sondern auch Gefahren. Beispielsweise bei der Bedienung eines Herdes in der Küche oder auch bei Heizungsanlagen kann der Bediener Schaden nehmen, wenn er den aktuellen Zustand des Gerätes nicht kennt. Der Gerätezustand wird in der Regel sehr klein und häufig sogar für Normalsichtige schwer lesbar am Gerät angezeigt.

Der Erfindung liegt die Aufgabe zugrunde, die Bedienung von Geräten für Personen mit Sehbehinderung zu erleichtern.

Diese Aufgabe wird mit einem Gerät mit einem elektronischen Bauteil gelöst, bei dem das elektronische Bauteil sich während der Zeit ändernde Betriebsdaten des Gerätes für ein Lesegerät auslesbar speichert.

Elektronische Bauteile werden in unterschiedlichen Geräten vor allem dazu genutzt, Funktionen am Gerät zu steuern und zu regeln. Häufig dienen sie auch dazu, den Gerätezustand in einer Anzeige dem Nutzer zu übermitteln.

Erfindungsgemäß wird das elektronische Bauteil jedoch dazu verwendet, Betriebsdaten des Gerätes so zu speichern, dass sie mit einem elektronischen Lesegerät ausgelesen werden können. Dies ermöglicht es einem Sehbehinderten, mit einem Lesegerät den aktuellen Betriebszustand des Gerätes zu erfassen, um das Gerät ordnungsgemäß zu bedienen.

Vorteilhaft ist es, wenn das elektronische Bauteil ein RFID-Transponder ist. Dies ermöglicht es auf einfache Art und Weise, Betriebsdaten des Gerätes leicht auslesbar zu speichern und mittels eines üblichen RFID-Lesegeräts die aktuell gespeicherte Information auszulesen.

Ein derartiges Gerät hat dann vorzugsweise einen stationären Teil mit dem elektronischen Bauteil und einen mobilen Teil mit dem Lesegerät. Der stationäre Teil ist beispielsweise ein Herd in der Küche, ein Radio im Wohnzimmer, aber auch beispielsweise ein Radio in einem Auto. Das mobile Teil trägt der Sehbehinderte, um damit den Betriebszustand des Gerätes auszulesen.

Eine bevorzugte Ausführungsvariante sieht vor, dass das Gerät ein Lesegerät aufweist, das dazu geeignet ist, Daten aus elektronischen Bauteilen verschiedener Geräte auszulesen. Dies wird dadurch erleichtert, dass die Betriebsdaten der Geräte standardisiert für das Lesegerät lesbar im elektronischen Bauteil gespeichert werden.

Um dem Sehbehinderten die Betriebsdaten anzuzeigen, kann eine auf Sehbehinderte abgestimmte Anzeige vorgesehen sein. Vorteilhaft ist es jedoch, wenn das Lesegerät einen Wandler aufweist, der die Betriebsdaten in akustische Signale umwandelt. Hierbei sind vor allem Sprachsignale von Vorteil, da sie es ermöglichen, eine Vielzahl an Betriebszuständen den Sehbehinderten mitzuteilen.

Die erfinderische Idee ist für eine Vielzahl an Geräten geeignet. Ein bevorzugtes Anwendungsgebiet ist der Haushalt. Ein einfacher Einsatzbereich hierfür sind beispielsweise Küchengeräte.

Der mobile Teil des Gerätes kann eine übliche RFID-Leseeinrichtung sein. Das mobile Teil kann jedoch auch eine Fernsteuerung sein, die es ermöglicht, auf das Gerät einzuwirken. Eine bevorzugte Ausführungsvariante sieht vor, dass ein Mobiltelefon das Lesegerät aufweist. Dadurch muss der Sehbehinderte nicht eine Vielzahl an Geräten mit sich führen, sondern er kann sein Mobiltelefon als Lesegerät verwenden, und die Einrichtungen am Mobiltelefon können dazu dienen, die gelesenen Informationen in akustische Signale umzuwandeln.

Die der Erfindung zugrundeliegende Aufgabe wird auch durch ein Verfahren gelöst. Bei einem derartigen Verfahren wird bevorzugt ein Gerät, wie es oben beschrieben wurde, verwendet. Verfahrensmäßig werden sich während der Zeit ändernde Betriebsdaten eines Gerätes auf einen Transponder gespeichert und mit einem Lesegerät gelesen, wobei das Lesegerät aus den Betriebsdaten akustische Signale erzeugt.

Hierbei ist es vorteilhaft, wenn die Betriebsdaten nach einer festegelegten Regel abgespeichert werden. Diese Regel kann als Standart fixiert werden und ermöglicht es dann, mit dem gleichen Lesegerät Betriebsdaten unterschiedlicher Geräte auf einfache Art und Weise zu lesen und in akustische Signale umzuwandeln.

Das elektronische Bauteil kann über die Zeit eine Vielzahl an Daten aufnehmen und speichern. Von diesen Daten können entsprechend einer festgelegten Regel bestimmte Daten durch das Lesegerät ausgelesen werden. Vorteilhaft ist es jedoch, wenn alte Betriebsdaten durch aktuelle Betriebsdaten überschrieben werden. Dadurch zeigt das elektronische Bauteil dem Lesegerät immer einen aktuellen Datensatz, der dem aktuellen Zustand des Gerätes entspricht.

Dadurch wird es möglich, dass das Lesegerät Betriebsdaten verschiedener Geräte liest. Außerdem ist es möglich, dass das Lesegerät Betriebsdaten verrechnet. So können beispielsweise aus verschiedenen über die Zeit gemessenen Zustandsdaten Entwicklungen berechnet und zukünftige Ereignisse extrapoliert werden. Dies ermöglicht es, die Lesefrequenz entsprechend der Änderung der Betriebsdaten zu variieren. Beispielsweise kann bei sich stark ändernden Betriebsdaten eine höhere Lesefrequenz vorgesehen werden als bei sich nur unwesentlich ändernden Betriebsdaten.

Eine besondere Ausführungsvariante sieht vor, dass das Lesegerät Betriebsdaten verschiedener Geräte verrechnet. Dies ermöglicht es beispielsweise, den Öffnungszustand von Fenstern zu ermitteln und gleichzeitig den Zustand der Heizungsanlage, um daraus Werte zu berechnen, die dem Sehbehinderten eine Information über die Klimasituation im Hause gibt. Hieraus können auch Warnsignale abgeleitet werden, wenn beispielsweise die Heizung immer stärker heizt und eine Vielzahl an Fenstern unverschlossen sind, während die Außentemperatur weit niedriger als die Raumtemperatur ist.

Eine vorteilhafte Meldung am Lesegerät sieht vor, dass das Lesegerät anzeigt, wenn es den Lesebereich verlässt. Gerade bei RFID-Transpondern ist der Lesebereich oft eingeschränkt, so dass es für den Sehbehinderten wichtig ist, zu erkennen, wenn sein Lesegerät bestimmte Gerätedaten nicht mehr erfassen kann.

In einem erfindungsgemäßen Ausführungsbeispiel wird eine standardisierte Methode vorgeschlagen, nach der der Betriebszustand verschiedener Geräte mittels der RFID-Technologie an einen Sehbehinderten übermittelt wird, ohne dass dieser seine Augen nutzen muss. Die RFID-Technologie eignet sich hierbei wegen des geringen Kostenaufwands und des hohen Maßes an Standardisierung. Mit ihr kann der Betriebszustand eines beliebigen Gerätes leicht aus diesem Gerät herausgelesen werden und an einen Empfänger übermittelt werden. Der Empfänger ist dabei stets am Körper des Sehbehinderten zu tragen und er empfängt bis zu einer bestimmten Entfernung die Signale des RFID-Chips. Dieser Empfänger wandelt das Signal in ein entsprechendes akustisches Signal um, das dem Sehbehinderten entweder über Lautsprecher oder über Kopfhörer übermittelt wird.

Dabei können auch Verknüpfungen zwischen Haushaltsgeräten hergestellt werden oder an bestimmte Geräte Bedingungen gebunden werden. Hierbei ist es vorteilhaft, wenn der Empfänger programmierbar ist.

Es ist beispielsweise denkbar, dass automatisch ein Warnsignal oder eine Erinnerung ertönt, wenn der Sehbehinderte den Sendebereich verlässt aber der Betriebszustand des Herdes, der Waschmaschine oder auch entsprechender Lüftungsanlagen noch auf einen eingeschalteten Zustand verweist. Ebenso können bestimmte Zeitabläufe berücksichtigt werden oder bestimmte Kombinationen, wie beispielsweise "Fenster sind offen und die Heizungsanlage ist auf maximaler Temperatur".

Ein besonderer Vorteil der Erfindung liegt darin, dass über eine Standardisierung einer entsprechenden Technologie ein Einbau einfacher RFID-Transponder in Waschmaschinen, Küchengeräte etc. ermöglicht wird. Diese einfachen und kostengünstigen Transponder können vom Gerät beschrieben werden. Ein einmal festgelegter Standart erlaubt es, mit dem gleichen Lesegerät unterschiedliche Geräte auszulesen und dem Sehbehinderten auf einfache Art und Weise Informationen über das Gerät zu vermitteln.

Durch den Einbau derart einfacher RFID-Transponder in bekannte Geräte werden diese Geräte besonders interessant für die große Gruppe sehbehinderter Personen. Die Erweiterung bekannter elektronischer Bauteile in den Geräten durch einen RFID-Transponder führt nur zu äußerst geringen Kosten, während der Vorteil für einen Sehbehinderten sehr hoch ist. Dies ermöglicht es den Herstellern, ihre Geräte für die Gruppe der Sehbehinderten zu optimieren und dadurch einen großen Kundenkreis besonders individuell anzusprechen.

## Patentansprüche

1. Gerät mit einem elektronischen Bauteil, ***dadurch gekennzeichnet, dass*** das elektronische Bauteil sich während der Zeit ändernde Betriebsdaten des Gerätes für ein Lesegerät auslesbar speichert.

2. Gerät nach Anspruch 1, ***dadurch gekennzeichnet, dass*** das elektronische Bauteil ein RFID-Transponder ist.

3. Gerät nach einem der vorhergehenden Ansprüche, ***dadurch gekennzeichnet, dass*** es einen stationären Teil mit einem elektronischen Bauteil und einen mobilen Teil mit einem Lesegerät aufweist.

4. Gerät nach einem der vorhergehenden Ansprüche, ***dadurch gekennzeichnet, dass*** es ein Lesegerät aufweist, das dazu geeignet ist, Daten aus elektronischen Bauteilen verschiedner Geräte auszulesen.

5. Gerät nach einem der vorhergehenden Ansprüche, ***dadurch gekennzeichnet, dass*** das Lesegerät einen Wandler aufweist, der die Betriebsdaten in akustische Signale umwandelt.

6. Gerät nach einem der vorhergehenden Ansprüche, ***dadurch gekennzeichnet, dass*** das Gerät ein Haushaltsgerät, insbesondere ein Küchengerät ist.

7. Gerät nach einem der vorhergehenden Ansprüche, ***dadurch gekennzeichnet, dass*** ein Mobiltelefon das Lesegerät aufweist.

8. Verfahren , insbesondere zur Verwendung eines Gerätes nach einem der Ansprüche 1 bis 7, bei dem sich während der Zeit ändernde Betriebsdaten eines Gerätes auf einen Transponder gespeichert und mit einem Lesegerät gelesen werden, wobei das Lesegerät aus den Betriebsdaten akustische Signale erzeugt.

9. Verfahren nach Anspruch 8, ***dadurch gekennzeichnet, dass*** die Betriebsdaten nach einer festgelegten Regel gespeichert werden.

10. Verfahren nach Anspruch 8 oder 9, ***dadurch gekennzeichnet, dass*** alte Betriebsdaten durch aktuelle Betriebsdaten überschrieben werden.

11. Verfahren nach einem der Ansprüche 8 bis 10, ***dadurch gekennzeichnet, dass*** das Lesegerät Betriebsdaten verschiedener Geräte liest.

12. Verfahren nach einem der Ansprüche 8 bis 11, ***dadurch gekennzeichnet, dass*** das Lesegerät Betriebsdaten verrechnet.

13. Verfahren nach einem der Ansprüche 8 bis 12, ***dadurch gekennzeichnet, dass*** das Lesegerät Betriebsdaten verschiedener Geräte verrechnet.

14. Verfahren nach einem der Ansprüche 8 bis 13, ***dadurch gekennzeichnet, dass*** das Lesegerät anzeigt, wenn es einen Lesebereich verlässt.
